# EUROPEAN PATENT APPLICATION

(11) **EP 4 772 565 A1**
(43) Date of publication of application: **08.07.2026**
(21) Application number: 25869643.4
(22) Date of filing: 07.11.2025
(51) Int. Cl.: C08J 11/04, C08J 11/28, C08L 19/00, G06Q 10/30

(54) **TIRE RECYCLING METHOD, STORAGE MEDIUM, ELECTRONIC DEVICE, AND COMPUTER PRODUCT PROGRAM**

(30) Priority: 08.11.2024 CN 202411597689
(71) Applicant: Eve Rubber Institute Co., Ltd., Qingdao, Shandong 266045 (CN); Sailun Group Co., Ltd., Qingdao, Shandong 266000 (CN)
(72) Inventor: LIU, Feng, Qingdao, Shandong 266045 (CN); WANG, Bin, Qingdao, Shandong 266045 (CN); JIA, Weijie, Qingdao, Shandong 266045 (CN); ZHANG, Dan, Qingdao, Shandong 266045 (CN); SONG, Yudian, Qingdao, Shandong 266045 (CN)
(74) Representative: HGF
(86) International application number: PCT/CN2025/133521
(87) International publication number: WO 2026/098654

(57) **Abstract**

The present invention provides a tire recovery method, a storage medium, an electronic apparatus, and a computer product program. The tire recovery method includes: acquiring waste tires and pre-treating the waste tires to obtain waste materials to be recovered; adding a first set amount of the waste materials to be recovered, a first set concentration of a solvent, a second set amount of a functionalized compound, and a third set amount of a catalyst into a batch reactor, and a chemical reaction occurring under a first set condition to obtain a first product system; and post-treating the first product system to obtain a product; wherein the first set condition comprises: a reaction time of 1 to 6 hours and a reaction temperature of 80°C to 120°C, so as to solve the problem in the related art that it is difficult for devulcanized rubber to be used as raw materials for high-performance rubber products due to molecular chain breakage and broadening of molecular weight distribution of the devulcanized rubber.

## Description

### Cross-Reference to Related Applications

The present invention claims priority to Chinese Patent Application No. 202411597689.0, filed to the China National Intellectual Property Administration on November 08, 2024 and entitled "Tire Recovery Method, Storage Medium, Electronic Apparatus, and Computer Product Program", which is incorporated herein by reference in its entirety.

### Technical Field

The present invention relates to the technical field of tire recycling, and in particular, to a tire recovery method, a storage medium, an electronic apparatus and a computer product program.

### Background

One of the core processes in the tire manufacturing industry is vulcanization, which chemically crosslinks elastomer molecular chains to construct a stable three-dimensional network structure, thereby imparting excellent mechanical performance and durability to a tire. However, the irreversibility of the vulcanization process also means that vulcanized rubber in waste tires cannot be directly reprocessed by means of melting or dissolution, which constitutes a major technical obstacle to the recycling of tires. Since the invention of vulcanized rubber, the recovery and reuse of waste tires have long troubled the rubber industry, and has become a challenge in urgent need of breakthroughs.

At present, waste tire recovery technologies are mainly divided into three major categories: rubber crushing, reuse, and devulcanization. The devulcanization technology aims to break polysulfide, disulfide and monosulfide bonds in vulcanized rubber, while for rubber vulcanized by peroxide or resin, it is necessary to cleave stronger carbon-carbon bonds or other chemical bonds. However, the devulcanized rubber, due to its molecular chain breakage and broadening of molecular weight distribution, tends to have decreased quality, resulting in a limited application range thereof, and the devulcanized rubber is difficult to use as raw materials for high-performance rubber products.

### Summary

A main object of the present invention is to provide a tire recovery method, a storage medium, an electronic apparatus, and a computer product program, so as to solve the problem in the related art that it is difficult for devulcanized rubber to be used as raw materials for high-performance rubber products due to molecular chain breakage and broadening of molecular weight distribution of the devulcanized rubber.

In order to achieve the object, according to one aspect of the present disclosure, a tire recovery method is provided and includes:
waste tires are acquired and pre-treated to obtain waste materials to be recovered;
a first set amount of the waste materials to be recovered, a first set concentration of a solvent, a second set amount of a functionalized compound, and a third set amount of a catalyst are added into a batch reactor, and a chemical reaction occurs under a first set condition to obtain a first product system; and
the first product system is post-treated to obtain a product;
wherein the first set condition includes: a reaction time of 1 to 6 hours and a reaction temperature of 80°C to 120°C.

Futher, a functional group at one terminal of the functionalized compound is any one of maleic anhydride, sulfhydryl group and amine group, and the other terminal of the functionalized compound is a group which is filler-dispersing, anti-aging or anti-reversion.

Further, the step that waste tires are acquired and pre-treated to obtain waste materials to be recovered, includes:
the waste tires are crushed to obtain initial waste materials to be recovered, wherein the initial waste materials to be recovered have a shape in any one or more of block shape, sheet shape and powder shape; and
the initial waste materials to be recovered are controlled to be dried at a set drying temperature, so as to obtain the waste materials to be recovered;
wherein the set drying temperature is 100°C.

Further, before the step that the chemical reaction occurs under the first set condition, the method further includes:
an inert gas is introduced into the batch reactor to remove oxygen from the reactor;
wherein the inert gas is any one of nitrogen and carbon dioxide, or
the inert gas is a mixed gas of nitrogen and carbon dioxide.

Futher, a residence time of the inert gas in the batch reactor is controlled to be 30 minutes; and/or
the number of times of introducing the inert gas into the batch reactor is set to at least three times, and a time interval between every two adjacent times of introducing the inert gas is 5 min to 30 min.
the solvent is any one of an alkane, a halogenated hydrocarbon, and a lipid; and/or
the first set concentration is 5% to 40%.

Futher, the step of that the first product system is post-treated to obtain the product, includes:
an alcohol substance is introduced into the batch reactor, and mixed with the first product system, to obtain the product and an initial solvent;
wherein the alcohol substance is any one of methanol, ethanol, propanol, butanol, pentanol and hexanol.

Futher, after the step that the product and the solvent are obtained, the method further includes:
the initial solvent is sequentially separated and rectified to obtain the solvent.

Futher, the initial waste materials to be recovered have a size from 50 mesh to 200 mesh.

Futher, the third set amount is 1/100 to 1/8000 of a total molar amount of the functionalized compound.

According to another aspect of the present disclosure, provided is a computer-readable storage medium, the computer-readable storage medium storing a computer program, wherein the computer program is configured to execute, when running, the tire recovery method as described above.

According to another aspect of the present disclosure, provided is an electronic apparatus, including a memory, a processor and a computer program stored in the memory and executable on the processor, wherein the processor executes the tire recovery method as described above by the computer program.

According to another aspect of the present disclosure, provided is a computer program product, including a computer program, wherein the computer program, when executed by a processor, implements the tire recovery method as described above.

By applying the technical solution of the present invention, the waste tires are subjected to steps such as crushing and drying in the pre-treatment stage, such that the uniformity and reactivity of raw materials are effectively improved, and the subsequent chemical reaction is more efficient. In the chemical reaction stage, by controlling the reaction time to be within a range of 1 to 6 hours and the reaction temperature to be within a range of 80°C to 120°C, the progress of the reaction is precisely controlled, the sufficiency and selectivity of the reaction are ensured, the increase of by-products caused by excessive reaction is avoided, and the low recovery efficiency caused by insufficient reaction is also avoided. The addition of the functionalized compound and the catalyst not only facilitates the decomposition of components of the waste tires, but also introduces new functional groups through functionalization reactions to improve the performance of devulcanized rubber, such that the recovered rubber has wider application prospects, especially in fields with higher requirements on performance, such as high-performance tire manufacturing and rubber product modification. In addition, by optimizing the reaction conditions and the use of chemical substances, the tire recovery method of the present invention significantly reduces energy consumption and environmental pollution while realizing high-efficiency recovery, complies with the requirements of sustainable development, and has significant economic benefits and social benefits.

In conclusion, the tire recovery method provided by the present invention not only increases the recovery efficiency and purity of waste tires, but also improves the performance of the recovered rubber by introducing the functionalized compound and the catalyst, thereby expanding the application range thereof.

### Brief Description of the Drawings

The drawings of the description, constituting a part of the present invention, are used for providing further understanding of the present invention, and the illustrative embodiments of the present invention and illustrations thereof are used for explaining the present invention, rather than constitute inappropriate limitation on the present invention. In the drawings:
Fig. 1 illustrates a block diagram showing the hardware structure of a computer terminal of a tire recovery method according to embodiments of the present invention; and
Fig. 2 illustrates a flowchart of a tire recovery method according to embodiments of the present invention.

### Detailed Description of the Embodiments

It is to be noted that embodiments in the present invention and features in the embodiments can combine with one another without conflicts. Hereinafter, the present invention is described in detail with reference to the accompanying drawings and in conjunction with the embodiments.

One of the core processes in the tire manufacturing industry is vulcanization, which chemically crosslinks elastomer molecular chains to construct a stable three-dimensional network structure, thereby imparting excellent mechanical performance and durability to a tire. However, the irreversibility of the vulcanization process also means that vulcanized rubber in waste tires cannot be directly reprocessed by means of melting or dissolution, which constitutes a major technical obstacle to the recycling of tires. Since the invention of vulcanized rubber, the recovery and reuse of waste tires have long troubled the rubber industry, and has become a challenge in urgent need of breakthroughs.

At present, waste tire recovery technologies are mainly divided into three major categories: rubber crushing, reuse, and devulcanization. The devulcanization technology aims to break polysulfide, disulfide and monosulfide bonds in vulcanized rubber, while for rubber vulcanized by peroxide or resin, it is necessary to cleave stronger carbon-carbon bonds or other chemical bonds. However, the devulcanized rubber, due to its molecular chain breakage and broadening of molecular weight distribution, tends to have decreased quality, resulting in a limited application range thereof, and the devulcanized rubber is difficult to use as raw materials for high-performance rubber products.

A main object of the present invention is to provide a tire recovery method, a storage medium, an electronic apparatus, and a computer product program, so as to solve the problem in the related art that it is difficult for devulcanized rubber to be used as raw materials for high-performance rubber products due to molecular chain breakage and broadening of molecular weight distribution of the devulcanized rubber.

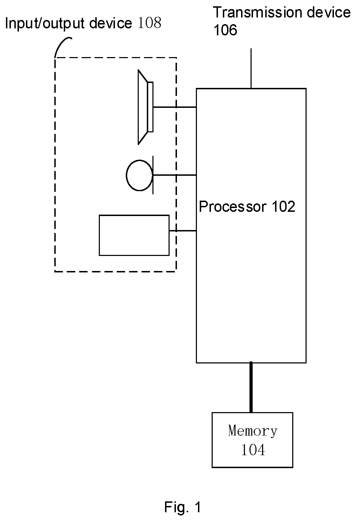

Method embodiments provided in embodiments of the present invention are executed in a computer terminal or a similar computing apparatus. Taking running the method on a computer terminal as an example, Fig. 1 is a block diagram showing the hardware structure of the computer terminal of a tire recovery method according to embodiments of the present invention. As shown in Fig. 1, the computer terminal includes: one or N (Fig. 1 shows only one) processors 102 (the processors 102 includes, but not limited to processing apparatus such as a micro processor (Central Processing Unit, MCU) or a programmable logic device (Field Programmable Gate Array, FPGA)); and a memory 104 for storing data, wherein the computer terminal further includes a transmission device 106 and an input/output device 108 for communication functions. A person of ordinary skill in the art would understand that the structure shown in Fig. 1 is merely exemplary, and does not limit the structure of the computer terminal. For example, the computer terminal also includes more or fewer assemblies than those shown in Fig. 1, or have different configurations from that shown in Fig. 1.

The memory 104 is used for storing a computer program, for example, a software program and module of application software, such as a computer program corresponding to the adjustment method for monitoring network points in embodiments of the present invention; and the processor 102 executes all functional applications and data processing by running the computer program stored in the memory 104, i.e. implementing the described method. The memory 104 includes a high-speed random access memory, and also includes a non-transitory memory, such as one or N magnetic storage apparatuses, flash memories or other non-transitory solid-state memories. In some examples, the memory 104 further includes memories remotely arranged with respect to the processors 102, and these remote memories are connected to the computer terminal via a network. Examples of the network include, but are not limited to the Internet, an intranet, a local area network, a mobile communication network and combinations thereof.

The transmission device 106 is used to receive or transmit data via a network. Specific examples of the network includes a wireless network provided by a communication provider of the computer terminal. In one example, the transmission device 106 includes a network adapter (Network Interface Controller, NIC for short) which is connected to other network devices by means of a base station, thereby being able to communicate with the Internet. In one example, the transmission device 106 is a Radio Frequency (RF for short) module which is configured to communicate with the Internet in a wireless mode.

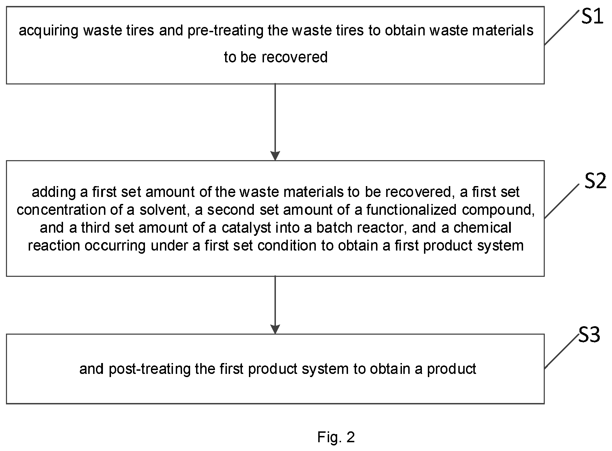

First, the present invention provides a tire recovery method. As shown in Fig. 2, the tire recovery method includes:
S1. waste tires are acquired and pre-treated to obtain waste materials to be recovered;
specifically: the waste tires are crushed to obtain initial waste materials to be recovered, wherein the initial waste materials to be recovered have a shape in any one or more of block shape, sheet shape and powder shape; and
the initial waste materials to be recovered are controlled to be dried at a set drying temperature, so as to obtain the waste materials to be recovered;
wherein the set drying temperature is 100°C.

Specifically, the acquired waste tires are crushed using a rubber crushing apparatus to obtain initial waste materials to be recovered, the initial waste materials to be recovered have a shape in any one or more of block shape, sheet shape and powder shape, and the initial waste materials to be recovered have a size from 50 mesh to 200 mesh, which facilitates increase of the efficiency and uniformity of chemical reactions during subsequent processing; and then the initial waste materials to be recovered are dried at a drying temperature of 100°C, so as to remove the moisture in the initial waste materials to be recovered and obtain the waste materials to be recovered.

By the technical solution of the present invention, the waste tires are no longer environment burdens, but become recyclable resources, and have important significance for promoting the circular economy and sustainable development.

S2. A first set amount of the waste materials to be recovered, a first set concentration of a solvent, a second set amount of a functionalized compound, and a third set amount of a catalyst are added into a batch reactor, and an inert gas is introduced into the batch reactor to remove oxygen from the reactor;
wherein the inert gas is any one of nitrogen and carbon dioxide, or the inert gas is a mixed gas of nitrogen and carbon dioxide, and a chemical reaction occurs under a first set condition to obtain a first product system;
a residence time of the inert gas in the batch reactor is controlled to be 30 minutes; and/or
the number of times of introducing the inert gas into the batch reactor is set to at least three times, and a time interval between every two adjacent times of introducing the inert gas is 5 min to 30 min;
the solvent is any one of an alkane, a halogenated hydrocarbon, and a lipid; and/or, the first set concentration is 5% to 40%; and a functional group at one terminal of the functionalized compound is any one of maleic anhydride, sulfhydryl group and amine group, and the other terminal of the functionalized compound is a group which is filler-dispersing, anti-aging or anti-reversion.

Optionally, the type of the catalyst is one or more of a metal ion compound and an amination reagent, and furthermore, the metal ion compound is a compound containing any one of palladium, copper, nickel, platinum, ruthenium, zinc and magnesium ions, and the amination reagent is a sulfodiimide, such as N, N'-dimethoxycarbonyl sulfodiimide (DMSD); N, N'-di-tert-butoxycarbonyl sulfodiimide (DTSD) and the like.

Specifically, to ensure that all chemical reactions are carried out in an oxygen-free environment, so as to prevent oxidation side reactions from occurring during the reaction, this can be achieved by introducing an inert gas (such as nitrogen, carbon dioxide, or a mixed gas of the two) into the batch reactor. The residence time of the inert gas in the reactor is controlled to be at least 30 minutes, which is to achieve sufficient replacement of oxygen in the reactor and ensure the inertness of the reaction environment. In addition, the inert gas is introduced multiple times (at least three times), and a time interval between two times of adjacent introductions is set as 5 to 30 minutes, such that the oxygen removal efficiency can be further increased, thereby ensuring smooth progress of the reaction.

Next, a first set amount of the waste materials to be recovered (e.g. pre-treated waste tire debris), a first set concentration of a solvent (e.g. alkane, halogenated hydrocarbon, or lipid solvent at a concentration between 5% to 40%), a second set amount of functionalized compound and a third set amount of catalyst are added into the reactor. The selection of the functionalized compound should take into consideration that the functional group at one terminal thereof can react with components in the tire waste, and the other terminal has a group which is e.g. filler-dispersing, anti-aging or anti-reversion, to improve the properties of the recovered material. The addition of the catalyst accelerates the reaction and increases the reaction efficiency.

Under a set reaction condition (i.e. a first set condition, a reaction time of 1-6 hours and a reaction temperature of 80°C-120°C), these components will undergo chemical reactions to form the first product system. In order to further increase the purity and recovery of the product, after the reactions, ethanol can be added into the reactor and mixed with the first product system, so as to precipitate or separate the product, and the solvent is also recovered. The recovered solvent can be recycled after steps such as separation and rectification, thereby reducing the cost of the whole process, wherein the third set amount is 1/100 to 1/8000 of a total molar amount of the functionalized compound, the first set concentration is determined according to the minimum unit of the molecular structure of rubber, and the determination of the second set amount is determined according to the equivalent of reactive sites; and in chemical reactions, especially reactions involving a polymer material, the "equivalent of reactive sites" generally refers to the number of specific structures in a reactive molecule that can chemically react with another reactant. For the functionalized compound in the tire recovery process, the reactive sites refer to chemical groups capable of reacting with rubber molecules (usually a vulcanized rubber) in the waste tires, such as maleic anhydride, sulfhydryl group and amine group These groups can react with vulcanization sites or other specific functional groups on the rubber molecular chain, thereby realizing chemical modification or functionalization of the rubber. The value of the first set concentration of solvent needs to be determined according to the minimum unit of the molecular structure of rubber, and the specific steps are as follows: first, the type and molecular structure of the rubber in the waste tires are known. Different types of rubbers (e.g. natural rubber and styrene butadiene rubber) have different structural features and minimal repeat units. Depending on the molecular structure of the rubber, reactive sites thereof such as vulcanization sites or other functional groups are determined. Given a certain amount of waste tires, the total number of reactive sites in the waste materials is determined by means of chemical analysis or theoretical calculation. A suitable solvent is selected on the basis of the solubility of the rubber and the nature of the reactive sites. The nature of the solvent should promote or not affect the reaction between the functionalized compound and the rubber. The first set concentration of solvent is to ensure that the functionalized compound can sufficiently contact and react with the reactive sites in the rubber molecules. When calculating the solvent concentration, the following factors need to be considered: the solubility of the functionalized compound in the solvent; the reaction compatibility between the solvent and the functionalized compound and the catalyst; and the density of the reactive sites and the reactivity of the functionalized compound, i.e. ensuring that the reactive groups of the functionalized compound can effectively react with each reactive site. The first set concentration of solvent determined in the present invention is between 5% and 40%.

By using the functionalized compound and the catalyst, the tire recovery method of the present invention can effectively recover waste tires under mild reaction conditions, avoiding excessive breakage of rubber molecular chains and broadening of molecular weight distribution which may be caused in traditional recovery methods, thereby improving the quality of recovered materials. In addition, by controlling the reaction environment to be in an oxygen-free state, the occurrence of oxidation side reactions is reduced, and the product purity is further ensured. The recovery and reuse of the solvent reduces the production costs and improves economic benefits. As a whole, the method of the present invention not only solves the technical problem of recycling waste tires, but also has the advantages of environmental protection and economy, and is of great significance to promote the sustainable development of the tire industry.

S3. the first product system is post-treated to obtain a product;
specifically, an alcohol substance is introduced into the batch reactor, and mixed with the first product system, to obtain the product and an initial solvent; the initial solvent is sequentially separated and rectified to obtain the solvent;
wherein the alcohol substance is any one of methanol, ethanol, propanol, butanol, pentanol and hexanol.

The first set condition includes: a reaction time of 1 to 6 hours and a reaction temperature of 80°C to 120°C,

Specifically, at the end of the reaction, the alcohol substance is immediately introduced into the reactor, wherein the alcohol substance is any one of methanol, ethanol, propanol, butanol, pentanol and hexanol; and one of the alcohol substances can be selected to be combined with the first product system, and the amount thereof should be sufficient to fully mix with the first product system, such that the chemical environment of the system is changed, thereby facilitating precipitation of the product or forming an easily-separated phase. In this embodiment, the selected alcohol is ethanol, wherein the addition amount and speed of ethanol need to be adjusted appropriately, so as to avoid violent temperature changes or pressure fluctuations, and ensure safe operation. After mixing, the product and the solvent need to be separated by physical methods such as filtration and centrifugation. The product typically precipitates in the form of a precipitate or solid, and the solvent remains in a liquid phase. Impurities in the solvent separated from the mixture needs to be further removed by a rectification process, to restore its initial purity. Rectification is a separation technique based on boiling point difference of components in a liquid mixture, and by controlling the temperature and pressure, a high-purity solvent can be effectively separated and recovered.

In the present disclosure, the recovery and reuse of the solvent reduces the consumption of chemicals, reduces the processing costs, and also reduces potential pollution to the environment, thereby reflecting the concept of green chemistry and circular economy. By introduction of the functionalized compound and the specific post-treatment steps, the molecular weight distribution of the product can be controlled, thereby avoiding performance degradation caused by molecular chain breakage of rubber in traditional tire recovery methods, such that the recovered rubber has performance closer to that of native rubber, thereby expanding the application range thereof. An inert gas (such as nitrogen) is introduced into the reactor to remove oxygen, reducing the risk of explosion or combustion in the system, and ensuring the safety of the operation process. The present method combines chemical reactions and physical separation technologies, and achieves chemical bond selective breaking and high-efficiency separation of products in tire recovery processes. Compared with traditional methods, the present method has a higher conversion rate and selectivity, and provides a new route for high-value utilization of waste tires.

### Example 1

1 kg of recovered solution-polymerized styrene butadiene devulcanized rubber and 1 to 10 g of an anti-aging agent having one terminal group of maleic anhydride were added into a reactor; the reactor was heated at a temperature of 50°C for 30 min, connected to a nitrogen storage apparatus, and filled with nitrogen for 3-5 times under vacuum; purified hexane (hexane which has been purified, i.e. hexane formed after removing water and oxygen) was added under a nitrogen atmosphere; the temperature increased to a reaction temperature (80°C to 120°C) while stirring; a catalyst toluene solution was injected; and after reacting for 3-6 hours, terminating, settling, drying and purifying were performed, a devulcanized solution-polymerized styrene butadiene-maleic anhydride-anti-aging agent compound was obtained. Analysis after extraction reveals that the grafting rate can be in the range of 2%-20%, said compound can be used as an aid, and the particular method is to calculate the rubber tube functionalization rate by means of nuclear magnetism, and the specific calculation method belongs to the related art, and will not be described herein; wherein the catalyst toluene solution refers to a solution formed by dissolving a catalyst in a toluene solvent, and the toluene solution can better disperse the catalyst, such that the catalyst can uniformly contact the waste materials to be recovered, thereby effectively catalyzing the chemical reactions, and helps the functionalized compound to react with the components in the waste tires, to achieve a better recovery effect. As a good organic solvent, toluene can dissolve multiple organic substances, including rubber and some catalysts, and is one of solvents commonly used in chemical reactions, wherein the CAS number of maleic anhydride is 108-31-6, MDL is MFCD00005518, and the manufacturer is Energy Chemical.

### Example 2

1 kg of recovered devulcanized natural rubber and 10 to 15 g of an anti-aging agent having one terminal group of sulfhydryl group were added into a reactor; the reactor was heated at 50°C for 30 min, connected to a nitrogen storage apparatus, and filled with nitrogen for 3-5 times under vacuum; purified hexane (hexane which has been purified, i.e. hexane formed after removing water and oxygen) was added under a nitrogen atmosphere; the temperature increased to a reaction temperature (80°C to 120°C) while stirring; a catalyst toluene solution was injected; and after reacting for 0.5-3 hours, terminating, settling, drying and purifying were performed, a devulcanized natural rubber-monosulfide bond-anti-aging agent compound was obtained. Analysis after extraction shows that the grafting rate can be in a range of 3%-30%, wherein the CAS number of the sulfhydryl group is 68865-60-1, and the manufacturer is Energy Chemical.

### Example 3

1 kg of recovered solution-polymerized styrene butadiene devulcanized rubber and 2 to 8 g of a surfactant having one terminal group of maleic anhydride were added into a reactor; the reactor was heated at 50°C for 30 min, connected to a nitrogen storage apparatus, and filled with nitrogen for 3-5 times under vacuum; purified hexane was added under a nitrogen atmosphere; the temperature increased to a reaction temperature while stirring; a catalyst toluene solution was injected; and after reacting for 2-5 hours, terminating, settling, drying and purifying were performed, a devulcanized solution-polymerized styrene butadiene-maleic anhydride-surfactant compound was obtained. Analysis after extraction shows that the grafting rate can be in a range of 2%-25%.

### Example 4

Taking a PCR (Passenger Car Radial) tire tread rubber compound formulation as a comparison standard, 20 g of devulcanized solution-polymerized styrene butadiene-maleic anhydride-surfactant compound was taken to replace SBR in the formulation at an equal amount for compounding, so as to obtain a comparison sample. The prepared reference sample was compared with the comparison sample before and after aging after acetone extraction, it has been found that the tensile product of the sample to which the devulcanized solution-polymerized styrene butadiene-maleic anhydride-surfactant compound has been added is improved by 15% compared with the reference sample.

Specifically, PCR (Passenger Car Radial) refers to a passenger car radial tire, and the tire tread rubber compound formulation is a rubber compound formulation for manufacturing a tire tread layer, and is generally well-designed according to performance requirements (such as wear resistance, wet skid resistance, and rolling resistance) of the tire. Here, the original formulation is set as the reference to compare to obtain the improved effect. The devulcanized solution-polymerized styrene butadiene is recovered rubber obtained by treating waste tires by chemical means, maleic anhydride is a compound capable of improving the performance of high molecular materials, and the surfactant can enhance the dispersibility and compatibility of the material. A combination of the three replaces the SBR in the original formulation at an equal amount, which means that a part of original rubber is replaced with the recovered rubber material while keeping the total weight of the formulation unchanged, so as to test the performance thereof. Compounding is a process in which rubber is sufficiently mixed with additives (such as carbon black, a vulcanizing agent, and a promoter) at a high temperature. Two samples were prepared, one being a reference sample prepared according to the original formulation and the other being a comparative sample replacing a part of the SBR with the described compound. Acetone extraction is a common method for the separation of additives and non-rubber components in rubber. The extracted sample was subjected to an aging treatment, which simulates performance change of the product in use environments, generally including long-time high-temperature, light illumination or mechanical stress test. The tensile product is an indicator for measuring the product of tensile strength and elongation at break of a rubber material when the material is stretched, and reflects the comprehensive stretching property of the material. The comparison sample shows a 15% higher tensile product before and after aging than that of the reference sample, which indicates that the properties of the recovered rubber material to which the devulcanized solution-polymerized styrene butadiene-maleic anhydride-surfactant compound has been added are increased compared with a pure SBR material, especially in terms of abrasion resistance and mechanical strength.

Embodiments of the present invention further provide a computer-readable storage medium, the computer-readable storage medium storing a computer program, wherein the computer program is configured to execute the steps in any one of the method embodiments when running.

Optionally, in the present embodiment, the storage medium may be configured to store a computer program for executing the following steps:
S1. waste tires are acquired and pre-treated to obtain waste materials to be recovered;
S2. a first set amount of the waste materials to be recovered, a first set concentration of a solvent, a second set amount of a functionalized compound, and a third set amount of a catalyst are added into a batch reactor, and a chemical reaction occurs under a first set condition to obtain a first product system; and
S3. the first product system is post-treated to obtain a product.

In some exemplary embodiments, the computer-readable storage medium may include, but is not limited to: various media that can store a computer program, such as a USB flash drive, a Read-Only Memory (ROM for short), a Random Access Memory (RAM for short), a removable hard disk, a magnetic disk, or an optical disc.

For specific examples in the present embodiment, reference can be made to the examples described in the described embodiments and exemplary embodiments, and thus they will not be repeated again in the present embodiment.

Embodiments of the present invention further provide a computer program product, including a computer program, wherein the computer program, when executed by a processor, implements the steps in any one of the method embodiments.

Embodiments of the present invention further provide another computer program product, including a non-transitory computer-readable storage medium, the non-transitory computer-readable storage medium storing a computer program, wherein the computer program, when executed by a processor, implements the steps in any one of the method embodiments.

Embodiments of the present invention further provide an electronic apparatus, including a memory and a processor; wherein the memory stores a computer program, and the processor is configured to run the computer program to execute the steps in any one of the method embodiments.

Optionally, in the present embodiment, the processor may be configured to execute the following steps by means of the computer program:
S1. waste tires are acquired and pre-treated to obtain waste materials to be recovered;
S2. a first set amount of the waste materials to be recovered, a first set concentration of a solvent, a second set amount of a functionalized compound, and a third set amount of a catalyst are added into a batch reactor, and a chemical reaction occurs under a first set condition to obtain a first product system; and
S3. the first product system is post-treated to obtain a product.

In some exemplary embodiments, the electronic apparatus can further include a transmission device and an input/output device, wherein the transmission device is connected to the processor, and the input/output device is connected to the processor.

For specific examples in the present embodiment, reference is made to the examples described in the described embodiments and exemplary embodiments, and thus they will not be repeated again in the present embodiment.

The content above merely relates to preferred embodiments of the present invention, and is not intended to limit the present invention. For a person skilled in the art, the present invention may have various modifications and changes. Any modifications, equivalent replacements, improvements and the like made within the spirit and principle of the present invention shall all fall within the scope of protection of the present invention.

## Claims

1. A tire recovery method, comprising:
acquiring waste tires and pre-treating the waste tires to obtain waste materials to be recovered; adding a first set amount of the waste materials to be recovered, a first set concentration of a solvent, a second set amount of a functionalized compound, and a third set amount of a catalyst into a batch reactor, and a chemical reaction occurring under a first set condition to obtain a first product system; and
post-treating the first product system to obtain a product;
wherein the first set condition comprises: a reaction time of 1 to 6 hours and a reaction temperature of 80°C to 120°C.

2. The tire recovery method according to claim 1, wherein
a functional group at one terminal of the functionalized compound is any one of maleic anhydride, sulfhydryl group and amine group, and an other terminal of the functionalized compound is a group which is filler-dispersing, anti-aging or anti-reversion.

3. The tire recovery method according to claim 1, wherein a step of acquiring waste tires and pre-treating the waste tires to obtain waste materials to be recovered, comprises:
crushing the waste tires to obtain initial waste materials to be recovered, wherein the initial waste materials to be recovered have a shape in any one or more of block shape, sheet shape and powder shape; and
controlling the initial waste materials to be recovered to be dried at a set drying temperature, so as to obtain the waste materials to be recovered;
wherein the set drying temperature is 100°C.

4. The tire recovery method according to claim 1, wherein before a step of the chemical reaction occurring under the first set condition, the method further comprises:
introducing an inert gas into the batch reactor to remove oxygen from the reactor;
wherein the inert gas is any one of nitrogen and carbon dioxide, or
the inert gas is a mixed gas of nitrogen and carbon dioxide.

5. The tire recovery method according to claim 4, wherein
a residence time of the inert gas in the batch reactor is controlled to be 30 minutes; and/or
a number of times of introducing the inert gas into the batch reactor is set to at least three times, and a time interval between every two adjacent times of introducing the inert gas is 5 min to 30 min.

6. The tire recovery method according to claim 1, wherein
the solvent is any one of an alkane, a halogenated hydrocarbon, and a lipid; and/or
the first set concentration is 5% to 40%.

7. The tire recovery method according to claim 1, wherein a step of post-treating the first product system to obtain the product, comprises:
introducing an alcohol substance into the batch reactor, and mixing the alcohol substance with the first product system, to obtain the product and an initial solvent;
wherein the alcohol substance is any one of methanol, ethanol, propanol, butanol, pentanol and hexanol.

8. The tire recovery method according to claim 7, wherein after a step of obtaining the product and the solvent, the method further comprises:
sequentially separating and rectifying the initial solvent to obtain the solvent.

9. The tire recovery method according to claim 3, wherein the initial waste materials to be recovered have a size from 50 mesh to 200 mesh.

10. The tire recovery method according to claim 1, wherein the third set amount is 1/100 to 1/8000 of a total molar amount of the functionalized compound.

11. A computer-readable storage medium, the computer-readable storage medium comprising a stored program, wherein the program, when running, executes a tire recovery method according to any one of claims 1 to 10.

12. An electronic apparatus, comprising a memory and a processor, wherein the memory stores a computer program, and the processor is configured to run the computer program so as to execute the tire recovery method according to any one of claims 1 to 10.

13. A computer program product, comprising a computer program, wherein the computer program, when executed by a processor, implements the tire recovery method 1 to 10.
